# EUROPEAN PATENT APPLICATION

(11) **EP 2 600 445 A1**
(43) Date of publication of application: **05.06.2013**
(21) Application number: 12152675.0
(22) Date of filing: 26.01.2012
(51) Int. Cl.: H01M 4/131, H01M 4/02, H01M 4/04, H01M 4/525, C01G 49/00

(54) **Nano cathode material usable for batteries and method of making same**

(30) Priority: 02.12.2011 CN 201110395158
(71) Applicant: Suzhou Golden Crown New Energy Co., Ltd., Suzhou City, Jiangsu (CN); Golden Crown New Energy (HK) Limited, Kowloon, Hong Kong (CN)
(72) Inventor: Huang, Jen-Chin, Suzhou City Jiangsu (CN)
(74) Representative: O'Callaghan, Robert James

(57) **Abstract**

A nano cathode material usable for batteries and a method for preparing the same are provided. The cathode material is comprised of nano particles so that the specific surface area of such particles is increased, thereby allowing a suitable size distribution of the particles, improving the conductivity of the cathode material, and maintaining the capacity characteristics of the cathode material for batteries.

## Description

The present invention relates generally to a cathode material for batteries, and more particularly, to a nano cathode material, such as lithium ferrous phosphate (LiFePO₄), for lithium ion batteries used in power tools, consumer electronic, and electric vehicles, and method of making same.

A lithium ion battery is a rechargeable and dischargeable battery in which lithium ions (Li⁺) can be intercalated in and deintercalated from positive electrode (cathode) and negative electrode (anode) materials. A cathode thereof is generally formed by a lithium intercalated compound, such as lithium cobalt oxide (LiCoO₂) and lithium nickel oxide (LiNiO₂) having layered crystal structures, and lithium manganese oxide (LiMn₂O₄) having a spinel crystal structure. During charging, Li⁺ is deintercalated from the cathode, passes through an electrolyte, and is then intercalated in the anode. At the same time, electrons are supplied from an external circuit to the anode for charge compensation. In contrast, during discharging, Li⁺ is deintercalated from the anode, passes through the electrolyte, and is then intercalated in the cathode material.

Conventionally, LiFePO₄ as a cathode material for lithium ion batteries has the advantages of being safe and long life-span. However, for LiFePO₄ as the cathode material for lithium ion batteries, problems with its conductivity and ionic conductance exist and need to be solved. In 2002, Prosini et al reported LiFePO₄ nanocrystals having a specific surface area of 8.95m²/g, which slightly improved the conductivity and ionic conductance of LiFePO₄ ("a new synthetic route for preparing LiFePO4 with enhanced electrochemical performance," J. Electrochem. Soc. 149:A886-A890, 2002). Furthermore, with the decrease in the particle size of the powder of a lithium ion material, the space between powder particles is increased, and the specific surface area becomes large. As a result, in fabricating an electrode with such powders, the proportion of a slurry diluent become high, the proportion of a binder decreases, the solid proportion in the ratio of solid to liquid is excessively low, and the electrode is loosely structured, thereby causing a low battery capacity, an excessive low energy ratio, and a poor conductivity. It would gain a great deal of industrial relevance if a new material that overcomes the disadvantages of the conventional material would be available.

Therefore, a heretofore unaddressed need exists in the art to address the aforementioned deficiencies and inadequacies.

In one aspect, the present invention provides a cathode material, in which particles of the material are all nano particles. In one embodiment, the cathode material is lithium ferrous phosphate (LiFePO₄).

In one embodiment, a portion of the nano particles have a size distribution of D₉₀ of below 900 nm.

In another embodiment, a portion of the nano particles have a size distribution of D₉₇ of below 1000 nm.

In yet another embodiment, a portion of the nano particles have a size distribution of D₁₀ in a range of about 10-200 nm, and preferably, a portion of the nano particles have a size distribution of D₁₀ in a range of about 10-100 nm.

In one embodiment, the nano particles have average diameter distributions of D₁₀ in a range of about 10-200 nm, D₅₀ in a range of about 100-600 nm, and D₉₀ in a range of about 600-800 nm.

In another embodiment, the nano particles have average diameter distributions of D₁₀ a range of about 10-100 nm, D₅₀ a range of about 200 - 500 nm, D₉₀ o a range of about 600-800 nm, and D₉₇ of below 1000 nm.

In yet another embodiment, the particles have average diameter distributions of D₁₀ in a range of about 50-100 nm, and D₅₀ in a range of about 200-500 nm.

In one embodiment, the particles have an average diameter distribution of D₁₀ of about 50 nm, D₅₀ of about 200 nm, D₉₀ of about 700 nm, and D₉₇ of about 900 nm.

In another embodiment, the particles have an average diameter distribution of D₁₀ of about 100 nm, D₅₀ of about 300 nm, D₉₀ of about 800 nm, and D₉₇ of about 900 nm.

In another aspect, the present invention relates to a method for preparing a cathode material. The method in one embodiment includes providing raw materials of the cathode material and mixing them to form a mixture, sintering the mixture at a first temperature in a range of about 150-400°C for a first period of time in a range of about 2-8 hours in a vacuum environment to form an intermediate compound, and sintering the intermediate product at a second temperature in a range of about 450-1200°C for a second period of time in a range of about 4-24 hours. In one embodiment, the raw materials comprise aminophosphate (NH₂PO₄), ferrous oxalate (FeC₂O₄), and lithium carbonate (Li₂CO₃).

In one embodiment, the step of sintering the intermediate product is performed in an inert gas or hydrogen environment.

In one embodiment, the step of sintering the intermediate product comprises: sintering the intermediate product at a third temperature in a range of about 450-600°C for a third period of time in a range of about 4-24 hours in an hydrogen environment, and sintering a product obtained in the step (a) at a fourth temperature in a range of about 600-1200°C for a fourth period of time in a range of about 4-24 hours in the hydrogen environment.

In one embodiment, the first temperature is about 250°C and the first period of time is about 1 hour. The third temperature is about 500°C and the second period of time is about 2 hours. The fourth temperature is about 650°C and the fourth period of time is about 2 hours.

In one embodiment, the first temperature is about 250°C and the first period of time is about 1 hour. The second temperature is about 650°C and the second period of time is about 5 hours.

In another one embodiment, the first temperature is about 250°C and the first period of time is about 1 hour. The second temperature is about 600°C and the second period of time is about 10 hours.

In addition, the method also includes the step of milling the material (step S5). Then, the milled material is subjected to gas stream classification at step S6, so as to obtain lithium ferrous phosphate powders in which particles thereof are all nano particles.

According to the present invention, the specific surface area of the particles of the cathode material is increased, thereby allowing a suitable size distribution of the particles, improving the conductivity of the cathode material, and maintaining the capacity characteristics of the cathode material for batteries. Particularly, when all the particles are nano particles, disadvantages of the particles of the cathode material in the prior art can be avoided.

These and other aspects of the present invention will become apparent from the following description of the preferred embodiment taken in conjunction with the following drawings, although variations and modifications therein may be effected without departing from the spirit and scope of the novel concepts of the disclosure.

The accompanying drawings illustrate one or more embodiments of the invention and together with the written description, serve to explain the principles of the invention. Wherever possible, the same reference numbers are used throughout the drawings to refer to the same or like elements of an embodiment, and wherein:

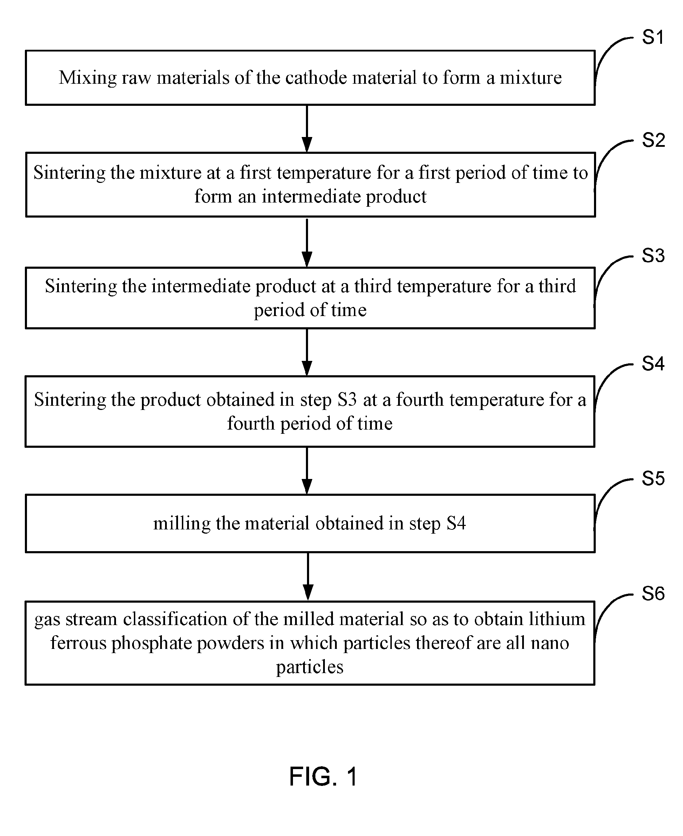

FIG. 1 is a process flow chart of a method for preparing a cathode material (lithium ferrous phosphate) according to an embodiment of the present invention.

The present invention will now be described more fully hereinafter with reference to the accompanying drawings, in which exemplary embodiments of the invention are shown. This invention may, however, be embodied in many different forms and should not be construed as limited to the embodiments set forth herein. Rather, these embodiments are provided so that this disclosure will be thorough and complete, and will fully convey the scope of the invention to those skilled in the art. Like reference numerals refer to like elements throughout.

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises" and/or "comprising," or "includes" and/or "including" or "has" and/or "having" when used herein, specify the presence of stated features, regions, integers, steps, operations, elements, and/or components, but do not preclude the presence or addition of one or more other features, regions, integers, steps, operations, elements, components, and/or groups thereof.

Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of the relevant art and the present disclosure, and will not be interpreted in an idealized or overly formal sense unless expressly so defined herein.

As used herein, "around", "about" or "approximately" shall generally mean within 20 percent, preferably within 10 percent, and more preferably within 5 percent of a given value or range. Numerical quantities given herein are approximate, meaning that the term "around", "about" or "approximately" can be inferred if not expressly stated.

The embodiments of the present invention described below include particles and nano particles, and the size of the particles are generally indicated by the average particle size distribution of Dₙ, where n is a percentage number between 0 and 100. Specifically, the average particle size distribution of Dₙ is defined as the cumulative undersize distribution of the relative amount of the particles at or below a particular size. For example, "particles having an average particle size distribution of D₅₀ of about 500 nm" means that 50% of the amount of the particles has the size at or below 500 nanometers.

The description will be made as to the embodiments of the present invention in conjunction with the accompanying drawing in FIG. 1. In accordance with the purposes of this invention, as embodied and broadly described herein, this invention, in one aspect, relates to a nano cathode material usuable for batteries and a method of preparing the same.

Referring to FIG. 1, a flow chart of the method for preparing a cathode material (lithium ferrous phosphate) is shown according to one embodiment of the present invention. The method includes providing raw materials of the cathode material and mixing them to form a mixture at step S1. The raw materials comprise lithium-containing, iron(II)-containing and oxygen-containing compounds. In one embodiment, the raw materials comprise aminophosphate (NH₂PO₄), ferrous oxalate (FeC₂O₄), and lithium carbonate (Li₂CO₃).

At step S2, the mixture is sintered at a first temperature in a range of about 150-400°C for a first period of time in a range of about 2-8 hours in a vacuum environment to form an intermediate product. At this step, the impurities such as moisture and oxygen in the raw materials are removed.

Then the intermediate product is sintered at a second temperature in a range of about 450-1200°C for a second period of time in a range of about 4-24 hours. The step of sintering the intermediate product is performed in an inert gas or hydrogen environment. In one embodiment, the sintering step includes two steps: the intermediate product is sintered at a third temperature in a range of about 450-600°C for a third period of time in a range of about 4-24 hours in an hydrogen environment (at step S3), which the raw materials in the intermediate product react and waste is removed, and then, a product obtained in the step (S3) is further sintered at a fourth temperature in a range of about 600-1200°C for a fourth period of time in a range of about 4-24 hours in the hydrogen environment (at step S4), in which the materials crystallize into the particles.

In one embodiment, the first temperature is about 250°C and the first period of time is about 1 hour. The third temperature is about 500°C and the second period of time is about 2 hours. The fourth temperature is about 650°C and the fourth period of time is about 2 hours.

In one embodiment, the first temperature is about 250°C and the first period of time is about 1 hour. The second temperature is about 650°C and the second period of time is about 5 hours. In another one embodiment, the first temperature is about 250°C and the first period of time is about 1 hour. The second temperature is about 600°C and the second period of time is about 10 hours.

In addition, the method also includes the step of milling the material (step S5). Then, the milled material is subjected to gas stream classification at step S6, so as to obtain lithium ferrous phosphate powders in which particles thereof are all nano particles.

The specific implementation of the present invention is described below with reference to examples; however, the exemplary descriptions are provided only for illustrating the implementation of the present invention with a limited number of examples, and are not intended to limit the claims of the present invention.

### Example 1

1.1 Raw materials:
   1.1.1 Aminophosphate (NH₂PO₄), 39.8 g,
   1.1.2 Ferrous oxalate (FeC₂O₄), 97.5 g, and
   1.1.3 Lithium carbonate (Li₂CO₃), 8.0 g.
1.2 Preparation method:
   1.2.1 Mixing step: the raw materials in Section 1.1 were mixed in a dry environment and milled for about 2 hours to obtain a uniform and finely milled dry powder.
   1.2.2 First sintering step: the raw materials were sintered at a temperature of about 250°C for 1 hr in a vacuum environment, and the liquid and gaseous impurities generated in the sintering process were separated.
   1.2.3 Second sintering step: the raw materials were sintered at a temperature of about 500°C for 2 hours in a hydrogen environment, and the carbon dioxide (CO₂) and ammonia (NH₃) generated in the sintering process were separated.
   1.2.4 Third sintering step: the raw materials were sintered at a temperature of about 650°C for 2 hours in the hydrogen environment.
   1.2.5 Grinding and gas stream classification step: the material was milled and subjected to gas stream classification to obtain a lithium ferrous phosphate powder in which particles thereof are all nano particles.
1.3 Product:
   1.3.1 Chemical formula: LiFePO₄.
   1.3.2 Specific surface area: the specific surface area is about 33 m²/g as measured by BET method.
   1.3.4 Particle size: the particles are of a cobblestone shape, and the calculated equivalent spherical particle size distribution is as follows.
   1.3.4.1 The average particle diameter/size distribution of D₁₀ is about 50 nm.
   1.3.4.2 The average particle diameter/size distribution of D₅₀ is about200 nm.
   1.3.4.3 The average particle diameter/size distribution of D₉₀ is about 700 nm.
   1.3.4.4 The average particle diameter/size distribution of D₉₇ is about 900 nm.
   1.3.5 Bulk density: 0.30 g/cm³.
   1.3.6 Tap density: 1.18 g/cm³.

### Example 2

2.1 Raw materials:
   2.1.1 Aminophosphate (NH₂PO₄), 39.8 g,
   2.1.2 Ferrous oxalate (FeC₂O₄), 97.5 g, and
   2.1.3 Lithium carbonate (Li₂CO₃), 8.0 g.
2.2 Preparation method:
   2.2.1 Mixing step: the raw materials in Section 2.1 were mixed in a dry environment and milled for about 2 hours to obtain a uniform and finely milled dry powder.
   2.2.2 First sintering step: the raw materials were sintered at a temperature of about 250°C for about 1 hr in a vacuum environment, and the liquid and gaseous impurities generated in the sintering process were separated.
   2.2.3 Second sintering step: the raw materials were sintered at a temperature of about 600°C for about 2 hours in a hydrogen environment, and the carbon dioxide (CO₂) and ammonia (NH₃) generated were separated.
   2.2.4 Milling and gas stream classification step: the material was milled and subjected to gas stream classification to obtain lithium ferrous phosphate powders in which particles thereof are all nano particles.
2.3 Product:
   2.3.1 Chemical formula: LiFePO₄
   2.3.2 Specific surface area: the specific surface area is about 28 m²/g, measured by a BET method.
   2.3.4 Particle size: the particles are of a cobblestone shape, and the calculated equivalent spherical particle size distribution is as follows.
   2.3.4.1 The average particle diameter/size distribution of D₁₀ is about 100 nm.
   2.3.4.2 The average particle diameter/size distribution of D₅₀ is about 300 nm.
   2.3.4.3 The average particle diameter/size distribution of D₉₀ is about 800 nm.
   2.3.4.4 The average particle diameter/size distribution of D₉₇ is about 900 nm.
   2.3.5 Bulk density: 0.25 g/cm³.
   2.3.6 Tap density: 1.05 g/cm³.

### Example 3

3.1 Raw materials:
   3.1.1 Aminophosphate (NH₂PO₄), 39.8 g,
   3.1.2 Ferrous oxalate (FeC₂O₄), 97.5 g, and
   3.1.3 Lithium carbonate (Li₂CO₃), 8.0 g.
3.2 Preparation method:
   3.2.1 Mixing step: the raw materials in Section 3.1 were mixed in a dry environment and milled for about 2 hours to obtain a uniform and finely milled dry powder.
   3.2.2 First sintering step: the raw materials were sintered at a temperature of about 250°C for about 1 hr in a vacuum environment, and the liquid and gaseous impurities generated in the sintering process were separated.
   3.2.3 Second sintering step: the raw materials were sintered at a temperature of about 600°C for about 10 hours in a hydrogen environment, and the carbon dioxide (CO₂) and ammonia (NH₃) generated were separated.
   3.2.4 Milling and gas stream classification step: the material was milled and subjected to gas stream classification to obtain lithium ferrous phosphate powders in which particles thereof are all nano particles.
3.3 Product:
   3.3.1 Chemical formula: LiFePO₄
   3.3.2 Specific surface area: the specific surface area is about 24 m²/g, measured by a BET method.
   3.3.4 Particle size: the particles are of a cobblestone shape, and the calculated equivalent spherical particle size distribution is as follows.
   3.3.4.1 The average particle diameter/size distribution of D₁₀ is about 100 nm.
   3.3.4.2 The average particle diameter/size distribution of D₅₀ is about 400 nm.
   3.3.4.3 The average particle diameter/size distribution of D₉₀ is about 900 nm.
   3.3.4.4 The average particle diameter/size distribution of D₉₇ is about 1000 nm.
   3.3.5 Bulk density: 0.34 g/cm³.
   3.3.6 Tap density: 1.28 g/cm³.

### Comparative Example

4.1 8.0 g of lithium carbonate (Li₂CO₃), 97.5 g of ferrous oxalate (FeC₂O₄), and 39.8 g of aminophosphate (NH₂PO₄) were mixed.
4.2 A resulting mixture obtained in Step 4.1 was heated at a temperature of about 300°C for about 1 hr in a vacuum environment, the liquid and gaseous impurities generated in the sintering process were separated, and oxalic acid and carbonic acid were removed while phosphoric acid was kept;
4.3 The semi-product obtained in Step 4.2 was sintered at a temperature about 550°C for about 2 hours in a nitrogen environment, and the carbon dioxide (CO₂), ammonia (NH₃), and oxygen (O₂) generated were separated.
4.4 The product obtained in Step 4.3 was sintered at a temperature of about 700°C for about 3 hours under in the nitrogen environment.
4.5 The material was milled and sieved to obtain the LiFePO₄ powders having a final particle size of about 1 to 10 µm.
4.6 The chemical formula is LiFePO₄, the specific surface area is 14.5 m²/g, the particles are of a cobblestone shape, and the calculated equivalent spherical particle diameter/size distribution is as follows.
4.6.1 The average particle diameter/size distribution of D₁₀ is about 1.05 µm.
4.6.2 The average particle diameter/size distribution of D₅₀ is about 4.56 µm.
4.6.3 The average particle diameter/size distribution of D₉₀ is about 10.5 µm.
4.6.4 The average particle diameter/size distribution of D₉₇ is about 22.3 µm.

### Comparison of performance of powders obtained in the examples

Specific surface area, bulk density, tap density of powders obtained in Examples 1, 2, and 3 and the Comparative Example were measured, recorded, and compared. The results are shown in table below.

| Examples or Comparative Example | Specific surface area | Bulk density | Tap density |
|---|---|---|---|
| | (m²/g) | (g/cm³) | (g/cm³) |
| Example 1 | 33 | 0.25 | 1.05 |
| Example 2 | 28 | 0.30 | 1.18 |
| Example 3 | 24 | 0.34 | 1.28 |
| Comparative Example | 14.5 | 0.45 | 1.12 |

It can be seen from the table that, although the lithium ferrous phosphate obtained in Comparative Example has a higher tap density, the tap density is undesirable since lithium ferrous phosphate powder is not a nanopowder; while the specific surface area and tap density of the lithium ferrous phosphate powders obtained in the examples of the present invention are all clearly high.

When the specific surface area of the powder of the cathode material becomes larger, the contact area between the particles in powder also becomes larger, and the conductivity becomes higher better. Furthermore, when the tap density of the powder of the cathode material becomes higher, the structure of the material layer compressed into an electrode becomes more compact, and the energy density of the whole battery becomes higher. Therefore, batteries manufactured with the lithium ferrous phosphate of the present invention as the cathode material can provide good conductivity and energy density.

The foregoing description of the exemplary embodiments of the invention has been presented only for the purposes of illustration and description and is not intended to be exhaustive or to limit the invention to the precise forms disclosed. Many modifications and variations are possible in light of the above teaching.

The embodiments were chosen and described in order to explain the principles of the invention and their practical application so as to activate others skilled in the art to utilize the invention and various embodiments and with various modifications as are suited to the particular use contemplated. Alternative embodiments will become apparent to those skilled in the art to which the present invention pertains without departing from its spirit and scope. Accordingly, the scope of the present invention is defined by the appended claims rather than the foregoing description and the exemplary embodiments described therein.

## Claims

1. A cathode material, being comprised of nano particles.

2. The cathode material according to claim 1, wherein the nano particles have a size distribution of D₉₀ of below 900 nm and/or a size distribution of D₉₇ of below 1000 nm.

3. The cathode material according to claim 1 or claim 2, wherein the nano particles have a size distribution of D₁₀ in a range of about 10-200 nm, preferably in a range of about 10-100 nm.

4. The cathode material according to any of claims 1 to 3, wherein the nano particles have an average diameter distribution of D₁₀ in a range of about 10-200 nm, D₅₀ in a range of about 100-600 nm, and D₉₀ in a range of about 600-800 nm,
and preferably an average diameter distribution of D₁₀ in a range of about 10-100 nm, D₅₀ in a range of about 200 - 500 nm, D₉₀ in a range of about 600-800 nm, and D₉₇ of below 1000 nm.

5. The cathode material according to any preceding claim, wherein the particles have an average diameter distribution of D₁₀ in a range of about 50-100 nm, and D₅₀ in a range of about 200-500 nm.

6. The cathode material according to any preceding claim, wherein the particles have either:
an average diameter distribution of D₁₀ of about 50 nm, D₅₀ of about 200 nm, D₉₀ of about 700 nm, and D₉₇ of about 900 nm; or
an average diameter distribution of D₁₀ of about 100 nm, D₅₀ of about 300 nm, D₉₀ of about 800 nm, and D₉₇ of about 900 nm.

7. The cathode material according to any preceding claim, wherein the cathode material is lithium ferrous phosphate (LiFePO₄).

8. A method for preparing a cathode material, comprising:
(i) providing raw materials of the cathode material and mixing them to form a mixture;
(ii) sintering the mixture at a first temperature in a range of about 150-400°C for a first period of time in a range of about 2-8 hours in a vacuum environment to form an intermediate compound; and
(iii) sintering the intermediate product at a second temperature in a range of about 450-1200°C for a second period of time in a range of about 4-24 hours so as to obtain the material.

9. The method according to claim 8, wherein the step of sintering the intermediate product is performed in an inert gas or hydrogen environment.

10. The method according to claim 8 or claim 9, wherein the step of sintering the intermediate product comprises:
(a) sintering the intermediate product at a third temperature in a range of about 450-600°C for a third period of time in a range of about 4-24 hours in an hydrogen environment; and
(b) sintering a product obtained in the step (a) at a fourth temperature in a range of about 600-1200°C for a fourth period of time in a range of about 4-24 hours in the hydrogen environment.

11. The method according to claim 10, wherein the first temperature is about 250°C and the first period of time is about 1 hour, wherein the third temperature is about 500°C and the second period of time is about 2 hours, and wherein the fourth temperature is about 650°C and the fourth period of time is about 2 hours.

12. The method according to claim 8 or claim 9, wherein the first temperature is about 250°C and the first period of time is about 1 hour, and wherein either:
the second temperature is about 650°C and the second period of time is about 5 hours; or
the second temperature is about 600°C and the second period of time is about 10 hours.

13. The method according to any of claims 8 to 12, wherein the raw materials comprise aminophosphate (NH₂PO₄), ferrous oxalate (FeC₂O₄), and lithium carbonate (Li₂CO₃).

14. The method according to any of claims 8 to 13, further comprising milling the material.

15. The method according to claim 14, wherein the milled material is subjected to gas stream classification so as to obtain lithium ferrous phosphate powders in which particles thereof are all nano particles.
